# EUROPÄISCHE PATENTSCHRIFT

(11) **EP 2 052 167 B1**
(45) Veröffentlichungstag und Bekanntmachung des Hinweises auf die Patenterteilung: **03.04.2013**
(21) Anmeldenummer: 07787320.6
(22) Anmeldetag: 10.07.2007
(51) Int. Cl.: F16F 9/46

(54) **DÄMPFER**
DAMPER
AMORTISSEUR

(30) Priorität: 09.08.2006 DE 102006037172
(43) Veröffentlichungstag der Anmeldung: 29.04.2009
(73) Patentinhaber: Robert Bosch GmbH, 70442 Stuttgart (DE)
(72) Erfinder: BRAUN, Sigmund, 72127 Kusterdingen (DE)
(86) Internationale Anmeldenummer: PCT/EP2007/057045
(87) Internationale Veröffentlichungsnummer: WO 2008/017563

(56) Entgegenhaltungen:
- EP-A- 0 355 357
- EP-A- 1 500 845
- DE-A1- 3 532 292
- DE-A1- 4 007 261
- FR-A- 2 630 797
- FR-A- 2 636 389

## Beschreibung

### Stand der Technik

Die Erfindung geht aus von einem Dämpfer nach der Gattung des unabhängigen Patentanspruchs 1.

Aus dem Stand der Technik sind Dämpfer für Fahrzeuge bekannt, deren Stoßdämpferkennwerte über hydraulische Proportionalventile eingestellt und an unterschiedliche Fahrsituationen angepasst werden können. Diese Proportionalventile steuern beispielsweise mit Hilfe eines Steuerkolbens, der von einer Erregerspule bewegt wird, kontinuierlich den Fluiddurchfluss im Dämpfer. Die Proportionalventile sind entweder an den Dämpfer angeflanscht oder im Kolbenstempel des Dämpfers integriert. Ein zusätzlicher Sensor, der an der Radaufhängung angeordnet ist, liefert Informationen über den Einfahrzustand des Dämpfers. Als Sensoren können Beschleunigungssensoren bzw. Wegsensoren mit Übertragungsgestänge verwendet werden. Zugehörige Auswerte - und Steuergeräte sind entweder zentral im Fahrzeug angeordnet oder können dezentral am angeflanschten Proportionalventil angeordnet sein. Das Proportionalventil kann beispielsweise den Hauptfluiddurchfluss indirekt steuern, d.h. ein kleiner Nebenfluss wird direkt von einem kleinen Steuerkolben reguliert und bildet eine Druckdifferenz zum Hauptventil. Aufgrund dieser regulierten Druckdifferenz stellt sich der Hauptfluiddurchfluss im Hauptventil ein. Dadurch wird erreicht, dass mit relativ geringen Stellkräften ein verhältnismäßig großer Druck gesteuert werden kann. Die Reaktionszeit des Dämpfers ist durch das Einschwingverhalten des Proportionalventils begrenzt.

In den Dokumenten EP-A-0 355 357, FR-A-2 636 389 und FR-A-2 630 797 wird jeweils ein Dämpfer für ein Fahrzeug beschrieben. Der beschriebene Dämpfer umfasst jeweils einen Dämpferzylinder, in welchem ein Kolbenstempel über eine Kolbenstange geführt ist, wobei zur Einstellung von Dämpferkennwerten der Durchfluss eines Dämpferfluids regelbar ist, wobei innerhalb des Dämpferzylinders Regelungsmittel angeordnet sind, welche zwei unabhängige Regelkreise für eine Zugstufenperiode und eine Druckstufenperiode aufweisen, wobei die Regelungsmittel während der Druckstufenperiode den Durchfluss des Dämpferfluids in eine erste Durchflussrichtung mit ersten Verstellmitteln regeln und während der Zugstufenperiode den Durchfluss des Dämpferfluids in eine zweite Durchflussrichtung mit zweiten Verstellmitteln regeln.

### Offenbarung der Erfindung

Der erfindungsgemäße Dämpfer mit den Merkmalen des unabhängigen Patentanspruchs 1 hat demgegenüber den Vorteil, dass innerhalb des Dämpferzylinders Regelungsmittel angeordnet sind, die zwei unabhängige Regelkreise für eine Zugstufenperiode und eine Druckstufenperiode aufweisen. Die Regelungsmittel regeln während der Zugstufenperiode den Durchfluss des Dämpferfluids in einer ersten Durchflussrichtung mit ersten Verstellmitteln. Während der Druckstufenperiode regeln die Regelungsmittel den Durchfluss des Dämpferfluids in einer zweiten Durchflussrichtung mit zweiten Verstellmitteln. Der erfindungsgemäße Dämpfer ermöglicht durch die mechanische Trennung von Zug- und Druckstufenperiode eine eindeutige und unabhängige Regelung der beiden Dämpferkräfte. Zudem ermöglicht der erfindungsgemäße Dämpfer in vorteilhafter Weise eine direkte Steuerung des Fluidflusses, die praktisch ohne Verzögerungen und/oder Einschwingzustände erfolgt. Der erfindungsgemäße Dämpfer kann beispielsweise als Zweirohr- oder Einrohrdämpfer ausgeführt werden.

Die Verstellgrößen für eines der beiden Verstellmittel kann fest vorgegeben werden und die erforderliche Verstellgröße für das andere der beiden Verstellmittel kann während des Betriebs ermittelt und durch die zugehörigen Vorgabemittel variabel eingestellt werden. Dies ermöglicht eine einfachere und kostengünstigere Ausführung des Dämpfers.

Die Verstellgröße der ersten Verstellmittel für eine nachfolgende Druckstufenperiode durch zugehörige erste Vorgabemittel während der zeitlich vor dieser Druckstufenperiode liegenden Zugstufenperiode eingestellt werden kann. Die Verstellgröße der zweiten Verstellmittel für eine nachfolgende Zugstufenperiode kann durch zugehörige zweite Vorgabemittel während der zeitlich vor dieser Zugstufenperiode liegenden Druckstufenperiode eingestellt werden. Die Verstellgrößen der ersten und zweiten Verstellmittel können beispielsweise als Verstellhub, als Verstellwinkel, als variable Federkonstante usw. umgesetzt werden.

Die ersten Vorgabemittel und/oder die zweiten Vorgabemittel werden im belasteten Zustand jeweils durch Selbsthemmung ohne Gegenkraft in Position gehalten. Zudem können die ersten Vorgabemittel und/oder die zweiten Vorgabemittel im unbelasteten Zustand jeweils über entsprechende Antriebseinheiten eingestellt werden, die beispielsweise als Magnetspulen und/oder Piezoelemente ausgeführt sind und in Abhängigkeit von den Signalen der oberen und/oder unteren Sensoreinheit angesteuert werden. Dadurch, dass das Verstellen der Vorgabemittel vom eigentlichen Arbeitshub des Verstellmittels entkoppelt ist und im unbelasteten Zustand erfolgt, und dass die Vorgabemittel während des zugehörigen Arbeitshubs des Verstellmittels durch Selbsthemmung gehalten werden, reichen geringe Stellkräfte aus, so dass Magnetspulen und/oder Piezoelemente als Antriebseinheiten verwendet werden können. Der entsprechende Arbeitshub des Verstellmittels wird durch die Durchflussrichtung repräsentiert, bei der das zugehörige Verstellmittel die Dämpfarbeit verrichtet. Zudem ermöglicht der erfindungsgemäße Dämpfer, eine stufenlose und schnelle Auswahl von Dämpferkennwerten bzw. von Dämpferkennlinien, so dass eine variierende Auswahl der Dämpfercharakteristik von "sehr hart" auf "sehr weich" möglich ist, die in vorteilhafter Weise unabhängig von einander für die Druckstufenperiode und für die Zugstufenperiode eingestellt werden können.

Der erfindungsgemäße Dämpfer ermöglicht in vorteilhafter Weise, dass als Regelungsmittel kostengünstige Bauteile mit relativ geringer Präzision verwendet werden können. Zudem ist eine vollständige Integration von Ventil-, Rad- und/oder Karosseriesensoren und dämpferlokalen Elektronikschaltungen in einer Einheit möglich.

Durch die in den abhängigen Ansprüchen aufgeführten Maßnahmen und Weiterbildungen sind vorteilhafte Verbesserungen des im unabhängigen Patentanspruch angegebenen Dämpfers möglich.

Die Verstellgrößen für die ersten Verstellmittel und/oder für die zweiten Verstellmittel können beispielsweise durch Auswerten von Signalen einer oberen Sensoreinheit und/oder einer unteren Sensoreinheit ermittelt werden, die beispielsweise Drucksensoren, Beschleunigungssensoren und/oder Wegesensoren und zugehörige Elektronikschaltungen umfassen können. Mit Hilfe der beiden Sensoreinheiten kann beispielsweise eine Kraft ermittelt werden, die auf den Dämpfer und somit auf das Fahrzeug direkt wirkt. Das bedeutet, dass auf eine Größe geregelt werden kann, die von einem Insassen, insbesondere vom Fahrer als Stoss empfunden wird.

In weiterer Ausgestaltung des erfindungsgemäßen Dämpfers können die ersten und zweiten Verstellmittel jeweils als Drosselklappe mit einem Wirkbereich und einem Anschlagbereich ausgeführt werden. Die Verstellgrößen der Verstellmittel können jeweils durch einstellbare Stellkeile und/oder Verstellhülsen vorgegeben werden, wobei die Verstellhülsen jeweils mit entsprechenden als Verstellzapfen ausgeführten Anschlagbereichen der Drosselklappen zusammenwirken. Zusätzlich können die ersten und zweiten Verstellmittel mit einem Gummilager zu einer Verstelleinheit zusammengefasst werden.

In weiterer Ausgestaltung des erfindungsgemäßen Dämpfers können die ersten und zweiten Verstellmittel, die ersten und zweiten Vorgabemittel, die zugehörigen Elektronikschaltungen, die Antriebseinheiten und die obere und untere Sensoreinheit als Baueinheit ausgeführt und vorzugsweise im Kolbenstempel angeordnet werden.

Vorteilhafte, nachfolgend beschriebene Ausführungsformen der Erfindung sind in den Zeichnungen dargestellt.

### Kurze Beschreibung der Zeichnungen

Fig. 1 zeigt eine perspektivische Darstellung eines Kolbens für einen erfindungsgemäßen Dämpfer.
Fig. 2 zeigt eine Draufsicht des Kolbens für einen erfindungsgemäßen Dämpfer gemäß Fig. 1.
Fig. 3 zeigt eine perspektivische Explosivdarstellung des Kolbens gemäß Fig. 1.
Fig. 4 zeigt eine schematische Schnittdarstellung eines Dämpfers, zur Beschreibung des Regelungsprinzips.
Fig. 5A und 5B zeigen jeweils eine schematische Darstellung einer Kraft-Zeit-Kennlinie zur Beschreibung des Regelungsprinzips.
Fig. 6 zeigt eine Schnittdarstellung eines Ausschnitts eines erfindungsgemäßen Dämpfers gemäß einem Ausführungsbeispiel.
Fig. 7 zeigt einen Querschnitt entlang der Linie VII-VII aus Fig. 6.
Fig. 8 zeigt eine Schnittdarstellung eines Ausschnitts des erfindungsgemäßen Dämpfers gemäß einem alternativen Ausführungsbeispiel.
Fig. 9A zeigt eine perspektivische Darstellung eines Verstellmittels des erfindungsgemäßen Dämpfers gemäß Fig. 8.
Fig. 9B und 9C zeigen jeweils eine perspektivische Darstellung einer Verstelleinheit mit jeweils zwei Verstellmitteln gemäß Fig. 9A.
Fig. 10A bis 10D zeigen jeweils eine Schnittdarstellung eines Ausschnitts des erfindungsgemäßen Dämpfers gemäß Fig. 8, zur Beschreibung der Funktion des erfindungsgemäßen Dämpfers.

### Ausführungsform(en) der Erfindung

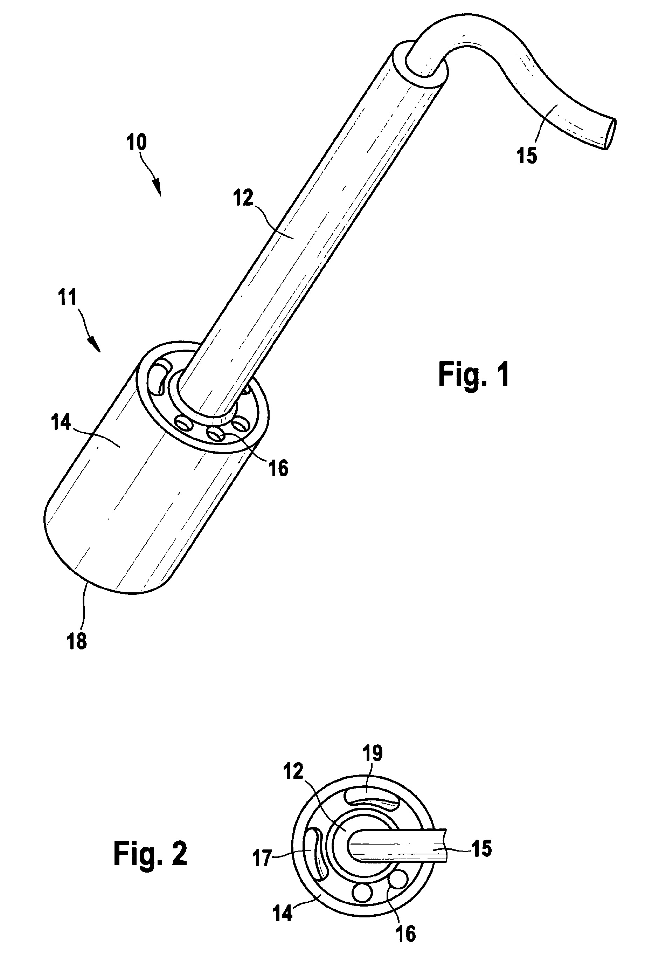

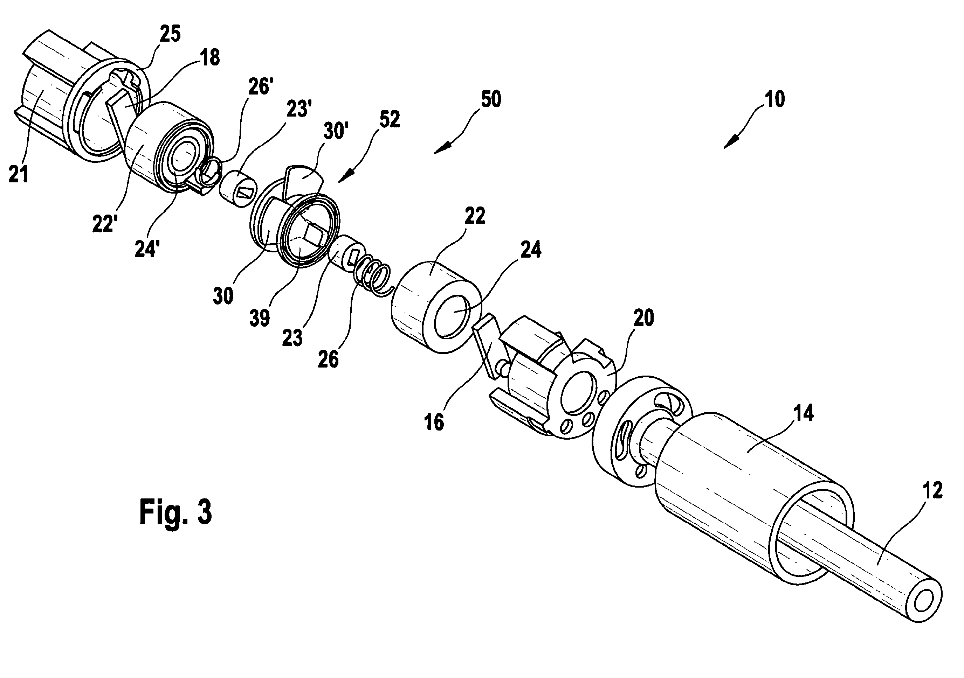

Wie aus Fig. 1 bis 3 ersichtlich ist, umfasst ein Kolben 10 für einen Dämpfer 1, vorzugsweise für einen Stoßdämpfer eines Fahrzeugs, eine Kolbenstange 12 und einen an der Kolbenstange 12 befestigten Kolbenstempel 11. Der Kolbenstempel 11 ist als kompakte Einheit ausgeführt, die als Gehäuse ein Stempelrohr 14 umfasst, das beispielsweise als dünnwandiges Stahlrohr ausgeführt ist. Im Stempelrohr 14 sind ein Gehäuseoberteil 20 und ein Gehäuseunterteil 21, die beispielsweise aus Aluminium hergestellt sind, eine obere Sensoreinheit 16, eine untere Sensoreinheit 18, und Regelungsmittel 50 angeordnet. Die beiden Sensoreinheiten 16, 18 können beispielsweise Drucksensoren, Beschleunigungssensoren und/oder Wegesensoren und jeweils eine zugehörige Elektronikschaltung umfassen. Die Regelungsmittel 50 umfassen im dargestellten Ausführungsbeispiel Antriebseinheiten 22, 22', die beispielsweise als Magnetspulen oder Piezoelemente ausgeführt sind, Verstellhülsen 23, 23', Reibhülsen 24, 24', einen Anschlagring 25, Druckfedern 26, 26' eine Verstelleinheit 52 und eine nicht dargestellte Auswerte- und Steuereinheit, die Signale der beiden Sensoreinheiten 16, 18 auswertet und die Regelungsmittel 50 in Abhängigkeit von der Auswertung zur Einstellung des Durchflusses eines Dämpferfluids durch einen ersten Regelkanal 17 bzw. durch einen zweiten Regelkanal 19 entsprechend ansteuert. Die nicht dargestellte Auswerte- und Steuereinheit kann ebenfalls innerhalb des Kolbenstempels 11 angeordnet werden und beispielsweise als Teil der Elektronikschaltung der oberen und/oder unteren Sensoreinheit 16, 18 ausgeführt werden. Alternativ kann die Auswerte- und Steuereinheit außerhalb des Dämpfers 1 in einem Steuergerät angeordnet werden. Die elektrische Versorgung bzw. die Signalübertragung für die Sensoreinheiten 16, 18 bzw. für die nicht dargestellte Steuer- und Auswerteeinheit erfolgt über eine Zuleitung 15, die durch ein entsprechende Bohrung in der Kolbenstange 12 zum Kolbenstempel 11 geführt wird.

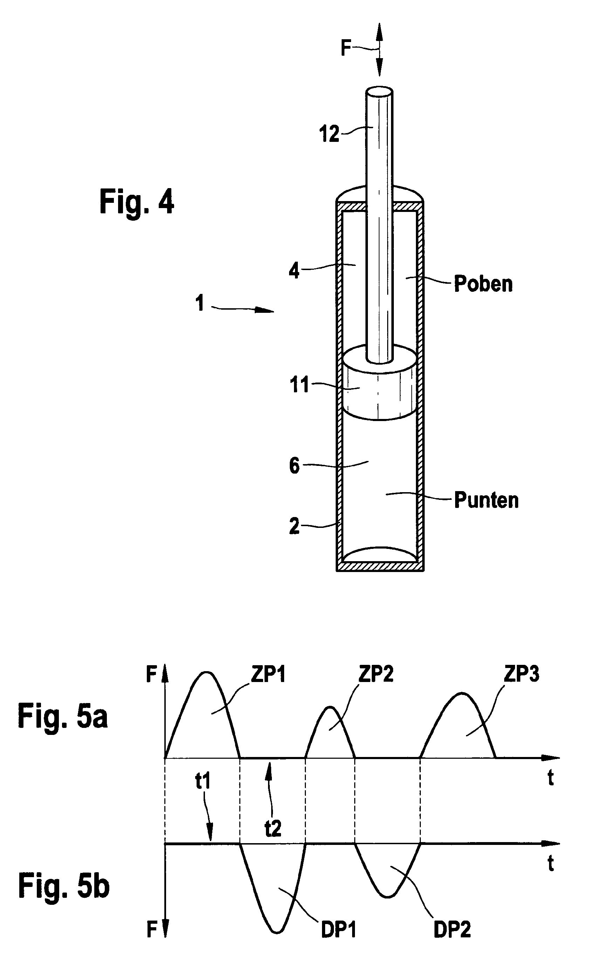

Nachfolgend wird unter Bezugnahme auf Fig. 4, 5A und 5B die Funktionsweise des erfindungsgemäßen Dämpfers 1 beschrieben.

Wie aus Fig. 4 ersichtlich ist, umfasst der Dämpfer 1 einen Dämpferzylinder 2, in dem der Kolbenstempel 11 über die Kolbenstange 12 beweglich angeordnet ist. Der Kolbenstempel 11 teilt den Dämpferzylinder 2 in eine obere Dämpferkammer 4 und eine untere Dämpferkammer 6. Die obere Drucksensoreinheit 16 detektiert beispielsweise den Druck Poben in der oberen Dämpferkammer 4 und die untere Sensoreinheit 18 detektiert beispielsweise den Druck Punten in der unteren Dämpferkammer 6. Als Regelgröße für die Regelungsmittel 50 wird die Kraft F verwendet, die auf den Kolben 10 des Dämpfers 1 wirkt. Mit Hilfe der beiden Sensoreinheiten 16, 18 wird die Kraft F, die auf den Dämpfer 1 und somit auf das Fahrzeug wirkt direkt ermittelt. Das bedeutet, dass auf eine Größe geregelt werden kann, die von einem Insassen und insbesondere vom Fahrer als Stoss empfunden wird. Die wirkende Kraft F kann direkt aus den beiden von den Sensoreinheiten 16, 18 an der Ober- und Unterseite des Kolbenstempels 11 erfassten Drücken Poben, Punten ermittelt werden.

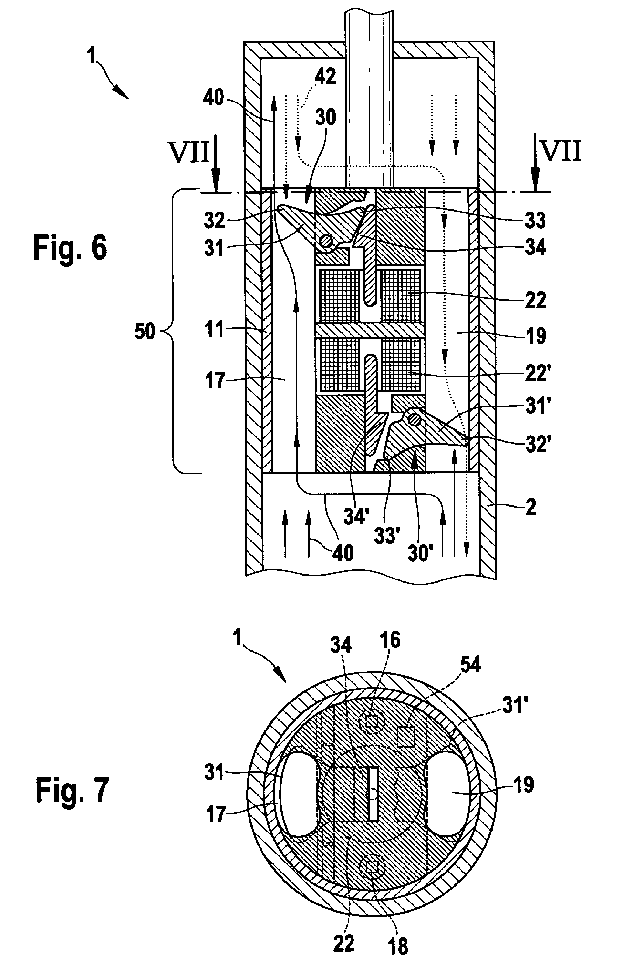

Die innerhalb des Dämpferzylinders 2 im Kolbenstempel 11 angeordneten Regelungsmittel 50 umfassen zwei unabhängige Regelkreise für eine Zugstufenperiode und eine Druckstufeperiode. Zur Regelung des Durchflusses des Dämpferfluids durch den ersten Regelkanal 17 in einer ersten Durchflussrichtung 40 während der Druckstufenperiode weisen die Regelungsmittel 50 erste Verstellmittel 30 auf, die nachfolgend unter Bezugnahme auf Fig. 6 bis 9C im Detail beschrieben werden. Zur Regelung des Durchflusses des Dämpferfluids durch den zweiten Regelkanal 19 in einer zweiten Durchflussrichtung 42 während der Zugstufenperiode weisen die Regelungsmittel 50 zweite Verstellmittel 30' auf, die nachfolgend unter Bezugnahme auf Fig. 6 bis 9C im Detail beschrieben werden.

Fig. 5A zeigt ein Kraft-Zeit-Diagramm für Zugstufenperioden ZP1, ZP2, ZP3 und Fig. 5B zeigt ein Kraft-Zeit-Diagramm für Druckstufenperioden DP1, DP2. Wie aus Fig. 5A und 5B ersichtlich ist, wird die mögliche Verstellgröße der ersten Verstellmittel 30 für eine erste Druckstufenperiode DP1 durch zugehörige erste Vorgabemittel während des Zeitraums t1 eingestellt, welcher der zeitlich vor dieser ersten Druckstufenperiode DP1 liegenden ersten Zugstufenperiode ZP1 entspricht. Die mögliche Verstellgröße der ersten Verstellmittel 30 für eine zweite Druckstufenperiode DP2 wird durch die zugehörigen ersten Vorgabemittel während der zeitlich vor der zweiten Druckstufenperiode DP2 liegenden zweiten Zugstufeperiode ZP2 eingestellt usw. Die mögliche Verstellgröße der zweiten Verstellmittel 30' für eine zweite Zugstufenperiode ZP2 wird durch zugehörige zweite Vorgabemittel während des Zeitraums t2 eingestellt, welcher der zeitlich vor dieser zweiten Zugstufeperiode ZP2 liegenden ersten Druckstufenperiode DP1 entspricht. Die mögliche Verstellgröße der zweiten Verstellmittel 30' für eine dritte Zugstufenperiode ZP3 wird durch zugehörige zweite Vorgabemittel während der zeitlich vor dieser dritten Zugstufeperiode ZP3 liegenden zweiten Druckstufenperiode DP2 eingestellt usw. Somit wird während der ersten Zugstufenperiode ZP1 der Durchfluss des Dämpferfluids durch den zweiten Regelkanal 19 in der zweiten Durchflussrichtung 42 über die zweiten Verstellmittel 30' eingestellt. Gleichzeitig werden während der ersten Zugstufenperiode ZP1 die Verstellgröße der ersten Verstellmittel 30 für die erste Druckstufenperiode DP1 über die Vorgabemittel entsprechend eingestellt und die erforderliche Verstellgröße der zweiten Verstellmittel 30' für die zweite Zugstufenperiode ZP2 ermittelt. Anschließend wird während der ersten Druckstufenperiode DP1 der Durchfluss des Dämpferfluids durch den ersten Regelkanal 17 in der ersten Durchflussrichtung 40 über die ersten Verstellmittel 30 eingestellt. Gleichzeitig werden während der ersten Druckstufenperiode DP1 die Verstellgröße der zweiten Verstellmittel 30' für die zweite Zugstufenperiode ZP2 über die Vorgabemittel entsprechend eingestellt und die erforderliche Verstellgröße der ersten Verstellmittel 30 für die zweite Druckstufenperiode DP2 ermittelt. Anschließend wird während der zweiten Zugstufenperiode ZP2 der Durchfluss des Dämpferfluids durch den zweiten Regelkanal 19 in die zweite Durchflussrichtung 42 über die zweiten Verstellmittel 30' eingestellt usw.

Die erforderlichen Verstellgrößen für die ersten Verstellmittel 30 und/oder für die zweiten Verstellmittel 30' werden durch Auswerten von Signalen der oberen Sensoreinheit 16 und/oder der unteren Sensoreinheit 18 ermittelt. Durch die beschriebene mechanische Trennung von Zugstufenperiode und Druckstufenperiode kann eine eindeutige und unabhängige Regelung für die beiden Dämpfungskräfte über die Regelung des Durchflusses des Dämpferfluids durch den ersten Regelkanal 17 bzw. den zweiten Regelkanal 19 erreicht werden. Die Verstellung der Vorgabemittel zur Einstellung der zugehörigen Verstellgröße für die Zug- bzw. Druckstufeperiode erfolgt in vorteilhafter Weise immer während des jeweiligen unbelasteten Zustands des Vorgabemittels.

Nachfolgend wird unter Bezugnahme auf Fig. 6 und 7 ein Ausführungsbeispiel eines erfindungsgemäßen Dämpfers 1 beschrieben. Wie aus Fig. 6 und 7 ersichtlich ist, umfasst der erfindungsgemäße Dämpfer 1 den Dämpferzylinder 2, in dem ein Kolbenstempel 11 beweglich angeordnet ist. Im Kolbenstempel 11 sind Regelungsmittel 50 angeordnet, deren erste und zweite Verstellmittel 30, 30' jeweils als Drosselklappen 31, 31' ausgeführt sind, die einen Wirkbereich 32, 32' und einen Anschlagbereich 33, 33' aufweisen. Die Arbeitshübe der Drosselklappen 31, 31' werden jeweils durch die zugehörigen als einstellbare Stellkeile 34, 34' ausgeführten ersten und zweiten Vorgabemittel vorgegeben, die zur Begrenzung des maximal möglichen Durchflussquerschnittes im jeweiligen Regelkanal 17, 19 jeweils auf den Anschlagbereich 33, 33' der zugehörigen Drosselklappe 31, 31' wirken.

Die erste drehbar gelagerte Drosselklappe 31 beeinflusst den Durchflussquerschnitt des Dämpferfluids im ersten Regelkanal 17 in Druckrichtung während der Druckstufenperiode und gibt somit die Dämpfungskraft vor. Die Drosselklappe 31 ist in ihrem Öffnungswinkel durch den rückseitig liegenden ersten Stellkeil 34 begrenzt. Der erste Stellkeil 34 ist so ausgelegt, dass er im belasteten Zustand während der Druckstufenperiode durch Selbsthemmung ohne Gegenkraft in Position gehalten wird. Fließt das Fluid während der Zugstufenperiode in eine entgegengesetzte Richtung 42, schließt sich die erste Drosselklappe 31 aufgrund ihrer Anordnung und Geometrie. Dabei liegt ihre Rückseite, d.h. ihr Anschlagbereich 33, nicht mehr am ersten Stellkeil 34 an. In diesem unbelasteten Zustand kann der erste Stellkeil 34 mit einer geringen Stellkraft in eine andere gewünschte Position gebracht werden. Dies geschieht mit Hilfe einer als Magnetspule ausgeführten ersten Antriebseinheit 22, in die ein kolbenförmiges Ende des ersten Stellkeils 34 hineinragt. Analog kann über die zweite Drosselklappe 31', bzw. den zweiten Stellkeil 34' und eine als Magnetspule ausgeführte zweite Antriebseinheit 22' die Dämpfungskraft in Zugrichtung 42 während der Zugstufenperiode beeinflusst werden. Über die an der Ober- bzw. Unterseite des Kolbenstempels 11 angeordneten Sensoreinheiten 16, 18 wird die jeweilige aktuelle Dämpfungskraft ermittelt. Der ermittelte Druckwert bzw. die Dämpfungskraft wird mit einem gewünschten Druckwert bzw. einer gewünschten Dämpfungskraft verglichen. Anschließend wird über die entsprechende Ansteuerung der jeweiligen Magnetspule 22, 22' die Position des entsprechenden Stellkeils 34, 34' verändert, sobald der betroffene Stellkeil 34, 34' beim nächsten Richtungswechsel nicht mehr belastet ist. Für die nächste Periode befindet sich der zugehörige Stellkeil 34, 34' jetzt in der neuen Position und gibt die gewünschte neue Dämpfungscharakteristik vor. Wie weiter aus Fig. 6 ersichtlich ist, sind die Antriebseinheiten 22, 22' für die als Stellkeile 34, 34' ausgeführten Vorgabemittel zwischen den beiden Verstellmitteln 30, 30' angeordnet. Über einen zusätzlichen am Kolbenstempel 11 angeordneten Beschleunigungssensor 54 kann die Karosseriefrequenz ermittelt werden.

Dadurch, dass die Verstellung der Vorgabemittel 34, 34' vom eigentlichen Arbeitshub der Verstellmittel 30, 30' entkoppelt ist und im unbelasteten Zustand der Vorgabemittel 34, 34' geschaltet wird, und dass die Vorgabemittel 34, 34' während des Arbeitshubs der Verstellmittel 30, 30' durch Selbsthemmung gehalten werden, reichen geringe Stellkräfte zur Verstellung aus, so dass Magnetspulen und/oder Piezoelemente als Antriebseinheiten 22, 22' verwendet werden können.

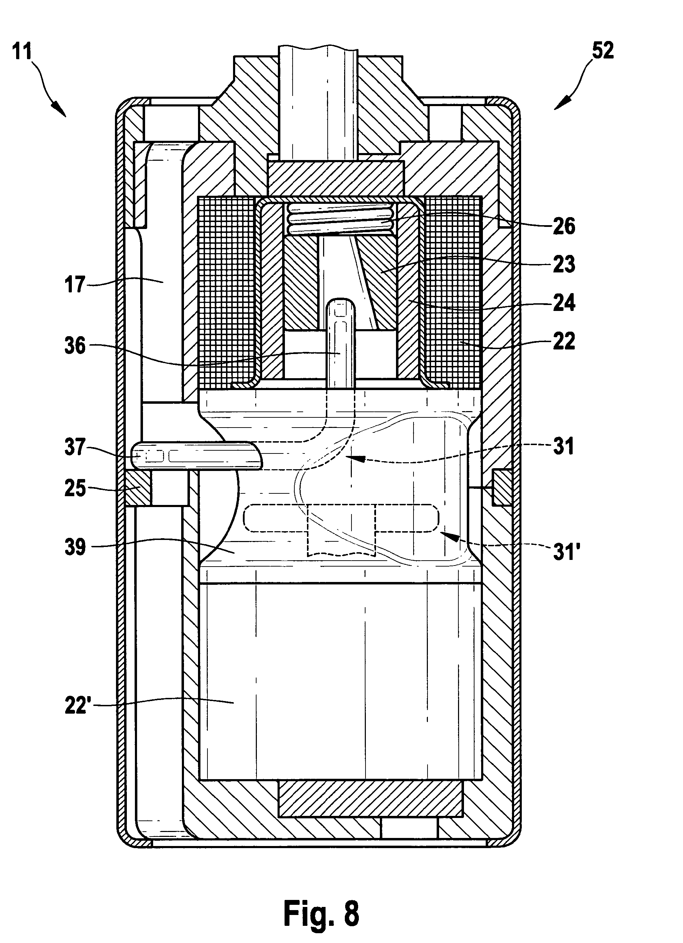

Nachfolgend wird unter Bezugnahme auf Fig. 8 bis 9C ein alternatives Ausführungsbeispiel eines erfindungsgemäßen Dämpfers 1 beschrieben. Wie aus Fig. 8 bis 9C ersichtlich ist, können die ersten und zweiten Verstellmittel 30, 30' der Regelungsmittel 50 alternativ zu einer Verstelleinheit 52 zusammengefasst werden. Die Verstelleinheit 52 umfasst als Drosselklappe 35 ausgeführte erste Verstellmittel 30, deren Anschlagbereich als Verstellzapfen 36 und deren Wirkbereich als Ventilklappe 37 ausgeführt sind, als Drosselklappe 35' ausgeführte zweite Verstellmittel 30', deren Anschlagbereich als Verstellzapfen 36' und deren Wirkbereich als Ventilklappe 37' ausgeführt sind, und ein Gummilager 39. Im Unterschied zum ersten Ausführungsbeispiel ist die Verstelleinheit 52 zwischen den beiden Antriebseinheiten 22 und 22' angeordnet, wobei eine erste Antriebseinheit 22 eine mit dem Verstellzapfen 36 der ersten Drosselklappe 35 zusammenwirkende erste Verstellhülse 23 umschließt und eine zweite Antriebseinheit 22' eine mit dem Verstellzapfen 36' der zweiten Drosselklappe 35' zusammenwirkende zweite Verstellhülse 23' umschließt.

Wie aus Fig. 8 ersichtlich ist, wirkt der als Verstellzapfen 36 ausgeführte Wirkbereich des ersten Verstellmittels 30 zur Vorgabe der Verstellgröße für die erste Ventilklappe 37 mit einer Innenkontur der zugehörigen Verstellhülse 23 zusammen. Die Innenkontur der Verstellhülse 23 kann beispielsweise als keilförmige oder konusförmige Aussparung ausgeführt werden. Die Verstellhülse 23 ist von der Antriebseinheit 22 umschlossen, die beispielsweise als Magnetspule ausgeführt ist und zur Einstellung der Verstellhülse 23 entsprechend bestromt wird. Eine Druckfeder 26 schiebt die Verstellhülse 23 in Richtung des Verstellzapfens 36. Dadurch stellt sich bei einem Spannungsabfall an der Magnetspule 22 eine harte Dämpferkennlinie ein, so dass bei einem Ausfall der Antriebseinheit 22 in vorteilhafter Weise ein Fail-Save-Verhalten erzielt wird. Die Verstellhülse 23 stützt sich an einer Reibhülse 24 ab, die beispielsweise einen als Gummibelag ausgeführten Reibbelag aufweisen kann. Dadurch ergibt sich in vorteilhafter Weise ein elastischer Anschlag mit Überdruckfunktion. Zudem ist durch eine günstigere Werkstoffpaarung ein größerer Keilwinkel möglich. Die Wirkungsweise des als Drosselklappe 35' ausgeführten zweiten Verstellmittels 30' entspricht der Wirkungsweise des ersten Verstellmittels 30, so dass hier auf eine erneut Beschreibung verzichtet wird.

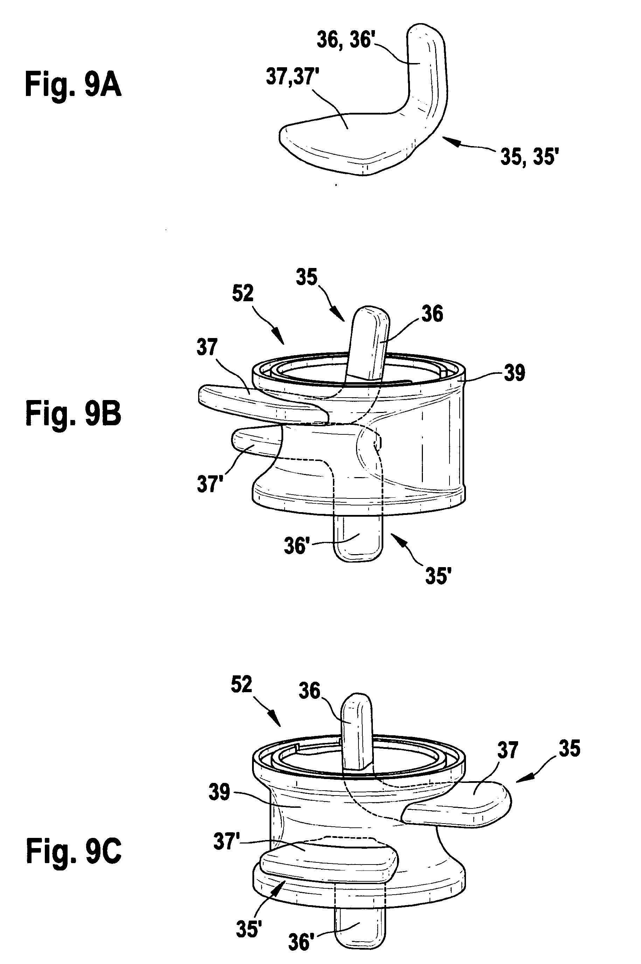

Wie aus Fig. 9A ersichtlich ist, können die Drosselklappen 35, 35' jeweils als Metallbiegeteil ausgeführt werden, das als Anschlagbereich einen Verstellzapfen 36, 36' und als Wirkbereich eine Ventilklappe 37, 37' umfasst.

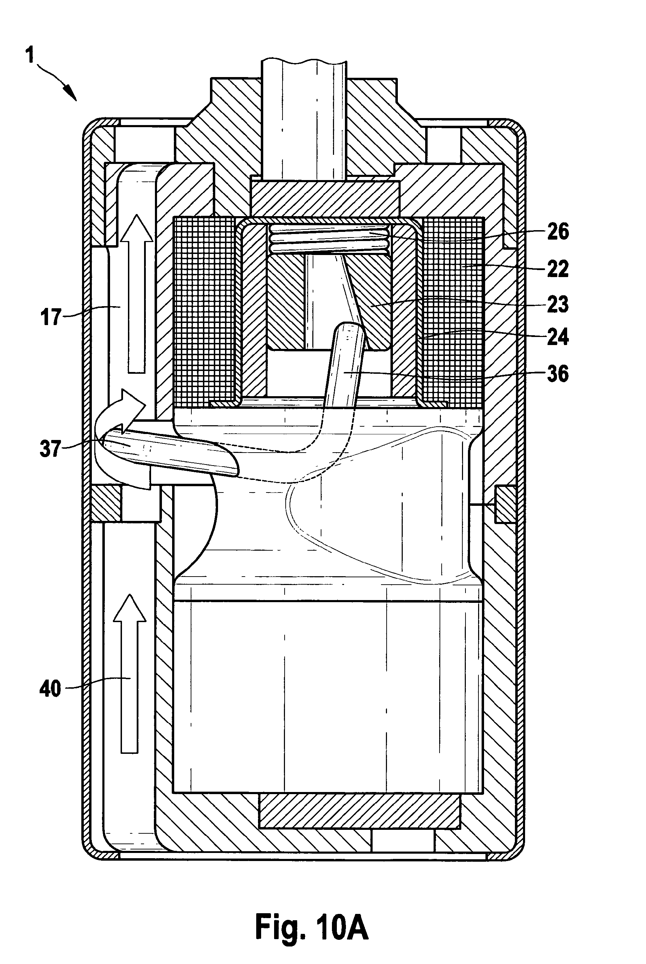

Wie aus Fig. 9B und 9C ersichtlich ist, kann die Verstelleinheit 52 als Gummimetallteil ausgeführt werden, welches die erste als Ventilklappe 37 mit Verstellzapfen 36 ausgeführte Drosselklappe 35 in einem Gummilager 39 mit der zweiten als Ventilklappe 37' mit Verstellzapfen 36' ausgeführten Drosselklappe 35' kombiniert. Wie nachfolgend unter Bezugnahme auf Fig. 10A bis 10D beschrieben ist, können die Verstellgrößen der im Gummilager 39 jeweils elastisch gelagerten ersten und zweiten Verstellmittel 30, 30' jeweils durch die ersten und zweiten Vorgabemittel vorgegeben werden. Die Vorgabemittel sind jeweils als mit dem entsprechenden Verstellzapfen 36, 36' zusammenwirkende einstellbare Verstellhülsen 23, 23' ausgeführt.

Nachfolgend wird unter Bezugnahme auf Fig. 10A bis 10D die Funktionsweise der Verstelleinheit 52 des erfindungsgemäßen Dämpfers 1 beschrieben. Wie aus Fig. 10A ersichtlich ist, fließt während der Druckstufenperiode im ersten Regelkanal 17 ein Dämpferfluid in die erste Durchflussrichtung 40, die auch als Druckrichtung bezeichnet wird. Das durchströmende Dämpferfluid öffnet die gummigelagerte Ventilklappe 37 der ersten Drosselklappe 35. Der Verstellzapfen 36 der ersten Drosselklappe 35 legt sich beim Fluiddurchfluss an die Innenkontur der Verstellhülse 23 an, die beispielsweise aus Stahl hergestellt ist. Je nach Stellung der Verstellhülse 23 innerhalb der Reibhülse 24 können der mögliche Öffnungswinkel und damit der Arbeitshub der Ventilklappe 37 eingestellt werden.

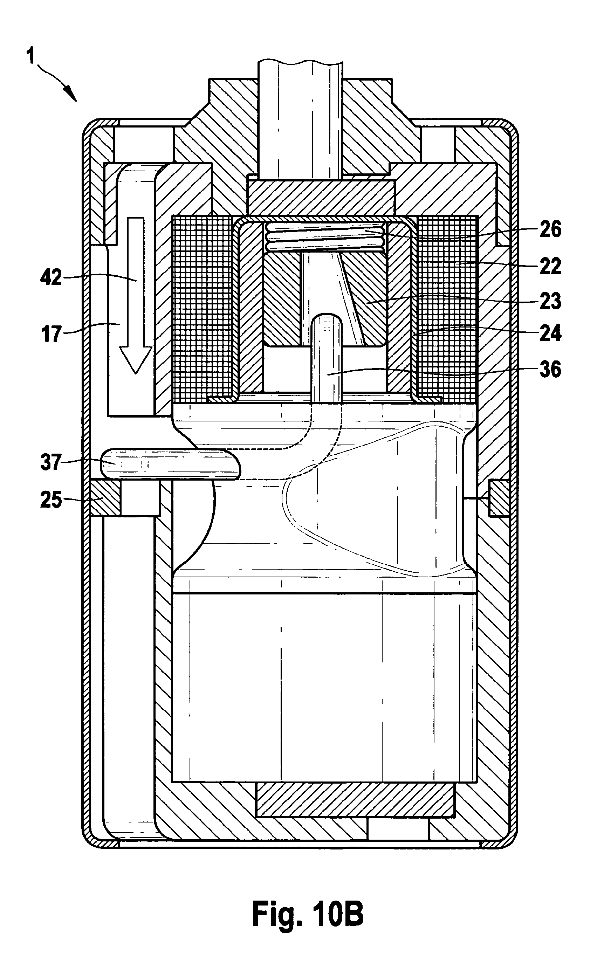

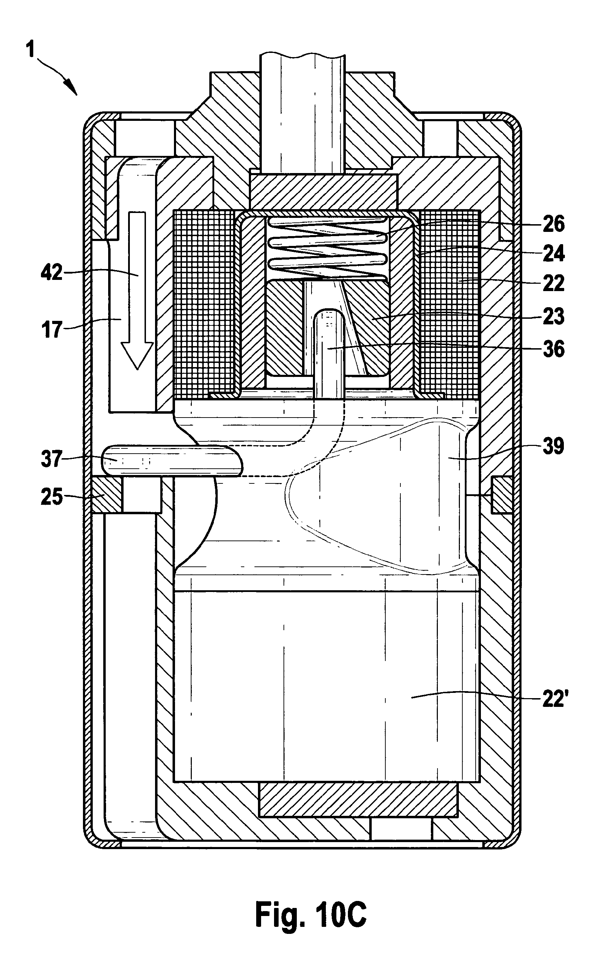

Wie aus Fig. 10B ersichtlich ist, fließt während der Zugstufenperiode der Fluidfluss im ersten Regelkanal 17 in die zweite Durchflussrichtung 42, die auch als Zugrichtung bezeichnet wird. Durch den Fluidfluss in die zweite Durchflussrichtung 42 wird die erste Ventilklappe 37 geschlossen, d.h. die erste Ventilklappe 37 liegt am Anschlagring 25 an. Der eigentliche Fluidfluss in die zweite Durchflussrichtung erfolgt im nicht dargestellten zweiten Regelkanal 19, der analog zur obigen Beschreibung durch die gummigelagerte zweite Drosselklappe 35' geregelt wird. Der Verstellzapfen 36 der geschlossenen ersten Drosselklappe 35 liegt nicht mehr an der Innenkontur der Verstellhülse 23 an. In diesem unbelasteten Zustand kann die Verstellhülse 23 mit geringen Kräften, die beispielsweise von der als Magnetspule ausgeführten ersten Antriebseinheit 22 aufgebracht werden, in eine neue Position gebracht werden. Fig. 10C zeigt die Verstellhülse 23 nach dem Einstellvorgang in der neuen Position. Wie aus Fig. 10C ersichtlich ist, ist die Verstellhülse 23 in die maximale untere Position gebracht worden.

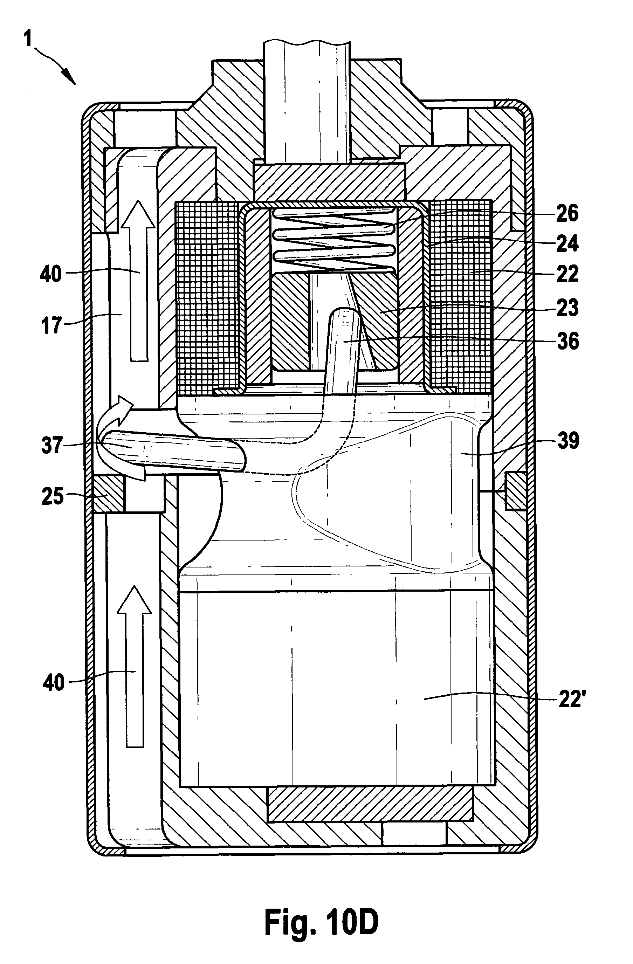

Fig. 10D zeigt die Auswirkungen der neuen Position der Verstellhülse 23 auf den Fluidfluss durch den ersten Regelkanal 17 in Druckrichtung 40 während der nachfolgenden Druckstufenperiode. Die erste Drosselklappe 35 weist jetzt die härteste Dämpfungskennlinie auf, die durch einen kleinen Öffnungswinkel und damit durch eine kleine Verstellgröße der Ventilklappe 37 repräsentiert wird.

Die Regulierung des Fluidflusses mit der zweiten Drosselklappe 35' in der zweiten Durchflussrichtung 42 erfolgt im nicht dargestellten zweiten Regelkanal 19 analog zu den Ausführungen zur Regulierung des Fluidflusses mit der ersten Drosselklappe 35 in der ersten Durchflussrichtung 40 im ersten Regelkanal 17.

Bei einer alternativen nicht dargestellten Ausführungsform des erfindungsgemäßen Dämpfers kann die Verstellgröße für eines der beiden Verstellmittel 30, 30' fest vorgegeben werden und die erforderliche Verstellgröße für das andere der beiden Verstellmittel 30', 30 kann während des Betriebs ermittelt und durch die zugehörigen Vorgabemittel variabel eingestellt werden. So kann beispielsweise der Dämpferfluidfluss im ersten Regelkanal 17 durch eine Vorgabe einer konstanten Verstellgröße für das zugehörige erste Verstellelement 30 reguliert werden. Das Verstellelement 30 kann beispielsweise als konventionelle Blattfeder mit einem Wirkbereich und einer gleich bleibenden Federkonstanten ausgeführt werden, wobei die Federkonstante die konstante Verstellgröße repräsentiert. Dadurch kann in vorteilhafter Weise auf die erste Antriebseinheit 22 und die Vorgabemittel verzichtet werden. Der Dämpferfluidfluss im zweiten Regelkanals 19 ist jedoch variabel ausgeführt und kann, wie oben ausgeführt ist, über das zweite Verstellelement 30' durch den einstellbaren zweiten Stellkeil 34' bzw. die einstellbare zweite Verstellhülse 23' variiert werden. Analog kann der Dämpferfluidfluss im zweiten Regelkanal 19 durch eine Vorgabe einer konstanten Verstellgröße für das zugehörige zweite Verstellelement 30' reguliert werden.

Die Ausführungsformen des erfindungsgemäßen Dämpfers ermöglichen in vorteilhafter Weise, dass für unterschiedliche Fahrsituationen immer die jeweils optimale Einstellung der Dämpferkennwerte möglich ist. Im Gegensatz zu einem herkömmlichen hydraulischen Proportionalventil ermöglichen die erfindungsgemäßen Klappenventile eine direkte Regelung des Hauptfluidflusses praktisch ohne Verzögerungen und Einschwingzustände, wobei die Regelung durch die Entkopplung des Verstellvorgangs vom eigentlichen Arbeitshub in vorteilhafter Weise mit geringen Stellkräfte ausgeführt werden kann. Durch die mögliche sehr kompakte Ausführungsform eignet sich der erfindungsgemäße Dämpfer auch zur Dämpfung von Fahrzeugkabinen von Nutzfahrzeugen, zur Dämpfung von Fahrzeugsitzen, Aufliegern usw. Zudem eignet sich der erfindungsgemäße Dämpfer auch für Anwendungen außerhalb der Fahrzeugtechnik, beispielsweise im Maschinenbau, die einen regelbaren Dämpfer mit kompakter Bauform erfordern.

## Patentansprüche

1. Dämpfer mit einem Dämpferzylinder (2), in welchem ein Kolbenstempel (11) über eine Kolbenstange (12) geführt ist, wobei zur Einstellung von Dämpferkennwerten der Durchfluss eines Dämpferfluids regelbar ist, wobei innerhalb des Dämpferzylinders (2) Regelungsmittel (50) angeordnet sind, welche zwei unabhängige Regelkreise für eine Zugstufendperiode (ZP1, ZP2, ZP3) und eine Druckstufenperiode (DP1, DP2) aufweisen, wobei die Regelungsmittel (50) während der Druckstufenperiode (DP1, DP2) den Durchfluss des Dämpferfluids in eine erste Durchflussrichtung (40) mit ersten Verstellmitteln (30) regeln und während der Zugstufenperiode (ZP1, ZP2, ZP3) den Durchfluss des Dämpferfluids in eine zweite Durchflussrichtung (42) mit zweiten Verstellmitteln (30') regeln, **dadurch gekennzeichnet, dass** die erforderliche Verstellgröße der ersten Verstellmittel (30) für eine nachfolgende Druckstufenperiode (DP1, DP2) durch zugehörige erste Vorgabemittel (34, 23) während der zeitlich vor dieser Druckstufeperiode (DP1, DP2) liegenden Zugstufenperiode (ZP1, ZP2) eingestellt wird und die erforderliche Verstellgröße der zweiten Verstellmittel (30') für die nachfolgende Zugstufenperiode (ZP2, ZP3) durch zugehörige zweite Vorgabemittel (34', 23') während der zeitlich vor dieser Zugstufenperiode (ZP2, ZP3) liegenden Druckstufenperiode (DP1, DP2) eingestellt wird, wobei das vertellen der ersten Vorgabemittel (34, 23) und/oder die zweiten Vorgabemittel (34', 23') im unbelasteten Zustand erfolgt.

2. Dämpfer nach Anspruch 1, **dadurch gekennzeichnet, dass** die Verstellgrößen für die ersten Verstellmittel (30) und/oder für die zweiten Verstellmittel (30') durch Auswerten von Signalen einer oberen Sensoreinheit (16) und/oder einer unteren Sensoreinheit (18) ermittelt werden, die vorzugsweise als Drucksensoreinheiten ausgeführt sind.

3. Dämpfer nach Anspruch 1 oder2, **dadurch gekennzeichnet, dass** die Verstellgröße für eines der beiden Verstellmittel (30, 30') fest vorgegeben ist und die erforderliche Verstellgröße für das andere der beiden Verstellmittel (30', 30) während des Betriebs ermittelt wird und durch das zugehörige Vorgabemittel (34, 34', 23, 23') variabel eingestellt wird.

4. Dämpfer nach einem der Ansprüche 1 bis 3, **dadurch gekennzeichnet, dass** die ersten Vorgabemittel (34, 23) und/oder die zweiten Vorgabemittel (34', 23') im belasteten Zustand jeweils durch Selbsthemmung ohne Gegenkraft in Position gehalten werden.

5. Dämpfer nach einem der Ansprüche 1 bis 4, **dadurch gekennzeichnet, dass** die ersten Vorgabemittel (34, 23) und/oder die zweiten Vorgabemittel (34', 23') jeweils über entsprechende Antriebseinheiten (22, 22') eingestellt werden, die in Abhängigkeit von den Signalen der oberen und/oder unteren Sensoreinheit (16, 18) ansteuerbar sind, die vorzugsweise als Drucksensoreinheiten ausgeführt sind.

6. Dämpfer nach einem der Ansprüche 1 bis 5, **dadurch gekennzeichnet, dass** die ersten und zweiten Verstellmittel (30, 30') jeweils als Drosselklappe (31, 31', 35, 35') mit einem Wirkbereich (32, 32', 37, 37') und einem Anschlagbereich (33, 33', 36, 36') ausgeführt sind, deren Verstellgrößen jeweils durch einstellbare Stellkeile (34, 34') und/oder Verstellhülsen (23, 23') vorgebbar sind, wobei die Verstellhülsen (23, 23') jeweils mit entsprechenden als Verstellzapfen (36, 36') ausgeführten Anschlagbereichen der Drosselklappen (35, 35') zusammenwirken.

7. Dämpfer nach einem der Ansprüche 1 bis 6, **dadurch gekennzeichnet, dass** die ersten und zweiten Verstellmittel (30, 30') mit einem Gummilager (39) zu einer Verstelleinheit (52) zusammenfassbar sind.

8. Dämpfer nach einem der Ansprüche 1 bis 7, **dadurch gekennzeichnet, dass** die ersten und zweiten Verstellmittel (30, 30'), die ersten und zweiten Vorgabemittel (34, 34', 23, 23'), Elektronikschaltungen, die Antriebseinheiten (22, 22') und die obere und untere Sensoreinheit (16. 18) als Baueinheit ausgeführt sind und vorzugsweise im Kolbenstempel (11) angeordnet sind.

## Claims

1. A damper having a damper cylinder (2) in which a piston plunger (11) is guided via a piston rod (12), wherein the throughflow of a damper fluid can be regulated in order to set damper characteristic values, wherein regulating means (50) are arranged inside the damper cylinder (2) and have two independent regulating circuits for a tensile stage period (ZP1, ZP2, ZP3) and a compression stage period (DP1, DP2), wherein during the compression stage period (DP1, DP2) the regulating means (50) regulate the throughflow of the damper fluid in a first throughflow direction (40) with first adjustment means (30), and during the tensile stage period (ZP1, ZP2, ZP3) the regulating means (50) regulate the throughflow of the damper fluid in a second throughflow direction (42) with second adjustment means (30'), **characterized in that** the necessary adjustment value of the first adjustment means (30) for a subsequent compression stage period (DP1, DP2) is set by associated first presetting means (34, 23) during the tensile stage period (ZP1, ZP2) which occurs chronologically before this compression stage period (DP1, DP2), and the necessary adjustment value of the second adjustment means (30') for the subsequent tensile stage period (ZP2, ZP3) is set by associated second presetting means (34', 23') during the compression stage period (DP1, DP2) which occurs chronologically before this tensile stage period (ZP2, ZP3), wherein the adjustment of the first presetting means (34, 23) and/or of the second presetting means (34' 23') occurs in the unloaded state.

2. Damper according to Claim 1, **characterized in that** the adjustment values for the first adjustment means (30) and/or for the second adjustment means (30') are determined by evaluating signals of an upper sensor unit (16) and/or of a lower sensor unit (18) which are preferably embodied as pressure sensor units.

3. Damper according to Claim 1 or 2, **characterized in that** the adjustment value for one of the two adjustment means (30, 30') is permanently preset and the necessary adjustment value for the other of the two adjustment means (30', 30) is determined during operation and is set in a variable fashion by the associated presetting means (34, 34', 23, 23').

4. Damper according to one of Claims 1 to 3, **characterized in that** the first presetting means (34, 23) and/or the second presetting means (34', 23') are each held in position in the loaded state by self-locking without an opposing force.

5. Damper according to one of Claims 1 to 4, **characterized in that** the first presetting means (34, 23) and/or the second presetting means (34', 23') are each set by means of corresponding drive units (22, 22') which can be actuated as a function of the signals of the upper and/or lower sensor units (16, 18) which are preferably embodied as pressure sensor units.

6. Damper according to one of Claims 1 to 5, **characterized in that** the first and second adjustment means (30, 30') are each embodied as a throttle valve (31, 31', 35, 35') with an active region (32, 32', 37, 37') and a stop region (33, 33', 36, 36') whose adjustment values can each be preset by adjustable actuation wedges (34, 34') and/or adjustment sleeves (23, 23'), wherein the adjustment .sleeves (23, 23') each interact with corresponding stop regions of the throttle valves (35, 35') which are embodied as adjustment pins (36, 36') .

7. Damper according to one of Claims 1 to 6, **characterized in that** the first and second adjustment means (30, 30') can be combined with a rubber bearing (39) to form an adjustment unit (52).

8. Damper according to one of Claims 1 to 7, **characterized in that** the first and second adjustment means (30, 30'), the first and second presetting means (34, 34', 23, 23'), electronic circuits, the drive units (22, 22') and the upper and lower sensor units (16, 18) are embodied as a structural unit and are preferably arranged in the piston plunger (11).

## Revendications

1. Amortisseur présentant un cylindre (2) d'amortisseur dans lequel un piston-poussoir (11) est guidé par l'intermédiaire d'une tige de piston (12), le débit .d'un fluide d'amortisseur pouvant être régulé pour ajuster des valeurs caractéristiques de l'amortisseur, des moyens de régulation (50) qui présentent deux boucles de régulation indépendantes de la période (ZP1, ZP2, ZP3) de la course de traction et de la période (DP1, DP2) de la course de poussée étant disposés à l'intérieur du cylindre (2) d'amortisseur, les moyens de régulation (50) régulant le débit du fluide d'amortisseur dans une première direction d'écoulement (40) par des premiers moyens d'ajustement (30) pendant la période (DP1, DP2) de la course de poussée et régulant le débit du fluide d'amortisseur dans une deuxième direction d'écoulement (42) à l'aide de deuxièmes moyens d'ajustement (30') pendant la période (ZP1, ZP2, ZP3) de la course de traction, **caractérisé en ce que**
la grandeur d'ajustement nécessaire des premiers moyens d'ajustement (30) pour une période suivante (DP1, DP2) de la course de poussée est réglée par des premiers moyens associés de prescription (34, 23) pendant la période (ZP1, ZP2) de la course de traction qui précède cette période (DP1, DP2) de la course de poussée et la grandeur d'ajustement nécessaire des deuxièmes moyens d'ajustement (30') pour la période (ZP2, ZP3) de la course de traction suivante est réglée par des deuxièmes moyens associés de prescription (34', 23') pendant la période (DP1, DP2) de la course de poussée qui précède cette période (ZP2, ZP3) de la course de traction, l'ajustement des premiers moyens de prescription (34, 23) et/ou des deuxièmes moyens de prescription (34', 23') s'effectuant à l'état non chargé.

2. Amortisseur selon la revendication 1, **caractérisé en ce que** les grandeurs d'ajustement pour les premiers moyens d'ajustement (30) et/ou pour les deuxièmes moyens d'ajustement (30') sont déterminées par évaluation de signaux d'une unité supérieure de détection (16) et/ou d'une unité inférieure de détection (18) de préférence configurées comme unités de sonde de pression.

3. Amortisseur selon les revendications 1 ou 2, **caractérisé en ce que** la grandeur d'ajustement pour l'un des deux moyens d'ajustement (30, 30') est définie fixement et **en ce que** la grandeur d'ajustement nécessaire pour l'autre des deux moyens d'ajustement (30', 30) est déterminée en fonctionnement et est réglée de manière variable par le moyen associé de prescription (34, 34', 23, 23').

4. Amortisseur selon l'une des revendications 1 à 3, **caractérisé en ce que** les premiers moyens de prescription (34, 23) et/ou les deuxièmes moyens de prescription (34', 23') sont maintenus chacun en position par auto-freinage sans contre-force à l'état chargé.

5. Amortisseur selon l'une des revendications 1 à 4, **caractérisé en ce que** les premiers moyens de prescription (34, 23) et/ou les deuxièmes moyens de prescription (34', 23') peuvent être commandés par des unités associées (22, 22') de prescription en fonction des signaux de l'unité supérieure et/ou de l'unité inférieure de détection (16, 18) qui sont configurées de préférence comme unités de sonde de pression.

6. Amortisseur selon l'une des revendications 1 à 5, **caractérisé en ce que** les premiers et les deuxièmes moyens d'ajustement (30, 30') sont configurés tous deux sous la forme de clapets d'étranglement (31, 31', 35, 35') dotés d'une plage active (32, 32', 37, 37') et d'une plage de butée (33, 33', 36, 36') et dont les grandeurs d'ajustement peuvent êtres prédéterminées par des biseaux d'ajustement (34, 34') et/ou des douilles d'ajustement (23, 23') réglables, les douilles d'ajustement (23, 23') coopérant avec des parties de butée des clapets d'étranglement (35, 35') correspondants configurés comme tourillons d'ajustement (36, 36') .

7. Amortisseur selon l'une des revendications 1 à 6, **caractérisé en ce que** les premiers et les deuxièmes moyens d'ajustement (30, 30') peuvent être rassemblés en une unité d'ajustement (52) en recourant à un palier (39) en caoutchouc.

8. Amortisseur selon l'une des revendications 1 à 7, **caractérisé en ce que** les premiers et les deuxièmes moyens d'ajustement (30, 30'), les premiers et les deuxièmes moyens de prescription (34, 34', 23, 23'), les circuits électroniques, les unités d'entraînement (22, 22'), l'unité supérieure et l'unité inférieure de détection (16, 18) sont configurés en modules disposés de préférence dans le piston-poussoir (11).
